(19)

Europäisches
Patentamt

European
Patent Office

Office européen
des brevets

(11) **EP 4 361 746 A1**

(12) **EUROPEAN PATENT APPLICATION**
published in accordance with Art. 153(4) EPC

(43) Date of publication:
**01.05.2024 Bulletin 2024/18**

(21) Application number: **22848005.9**

(22) Date of filing: **27.05.2022**

(51) International Patent Classification (IPC):
**G05B 19/418** (2006.01)

(52) Cooperative Patent Classification (CPC):
**G05B 19/418**

(86) International application number:
**PCT/CN2022/095457**

(87) International publication number:
**WO 2023/005395 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 CN 202110872103**

(71) Applicant: **Huawei Technologies Co., Ltd.
Longgang
Shenzhen, Guangdong 518129 (CN)**

(72) Inventors:
 • **ZHEN, Huiling
 Shenzhen, Guangdong 518129 (CN)**

 • **LUO, Wanqian
 Shenzhen, Guangdong 518129 (CN)**
 • **ZHU, Fangzhou
 Shenzhen, Guangdong 518129 (CN)**
 • **YUAN, Mingxuan
 Shenzhen, Guangdong 518129 (CN)**
 • **ZENG, Jia
 Shenzhen, Guangdong 518129 (CN)**
 • **HAO, Jianye
 Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **METHOD AND APPARATUS FOR INDUSTRIAL PLANNING, AND DEVICE, STORAGE MEDIUM AND PROGRAM PRODUCT**

(57) Disclosed is an industrial programming method in the field of artificial intelligence. An industrial programming method and apparatus, a device, a storage medium, and a program product are provided. In a programming scheme generation method, a programming device (240) obtains a first group of constraints for a plurality of parameters in an industrial programming job (310). Further, the programming device (240) constructs, based on the first group of constraints, a cut constraint associated with at least one integer parameter in the plurality of parameters (320), and constructs a second group of constraints based on the cut constraint and the first group of constraints, where a type of the at least one integer parameter in the second group of constraints is changed (330). The programming device (240) determines values of the plurality of parameters based on the second group of constraints, to generate a programming scheme for the industrial programming job (340). Therefore, efficiency of industrial programming can be improved by adding a cut constraint in a relaxation model construction phase.

300

```
┌─────────────────────────────────────────────────────────┐   310
│ Obtain a first group of constraints for a plurality of  │
│ parameters in an industrial programming job             │
└─────────────────────────────────────────────────────────┘
                          │
                          ▼
┌─────────────────────────────────────────────────────────┐   320
│ Construct, based on the first group of constraints, a   │
│ cut constraint associated with at least one integer     │
│ parameter in the plurality of parameters                │
└─────────────────────────────────────────────────────────┘
                          │
                          ▼
┌─────────────────────────────────────────────────────────┐   330
│ Construct a second group of constraints based on the    │
│ cut constraint and the first group of constraints, where│
│ a type of the at least one integer parameter in the     │
│ second group of constraints is changed                  │
└─────────────────────────────────────────────────────────┘
                          │
                          ▼
┌─────────────────────────────────────────────────────────┐   340
│ Determine values of the plurality of parameters based on│
│ the second group of constraints, to generate a          │
│ programming scheme for the industrial programming job   │
└─────────────────────────────────────────────────────────┘
```

FIG. 3

EP 4 361 746 A1

**Description**

**TECHNICAL FIELD**

Embodiments of this application mainly relate to the field of artificial intelligence technologies. More specifically, embodiments of this application relate to an industrial programming method and apparatus, a device, a computer-readable storage medium, and a computer program product.

**BACKGROUND**

A large quantity of programming problems, such as factory production planning, production scheduling, three-dimensional packing, and factory location, in industrial production can be represented by a mixed integer programming (mixed integer programming, MIP) model. What these problems have in common are that there is at least one target and variables are required to meet a series of constraints. These constraints are usually from service requirements or actual requirements. These industrial programming problems usually relate to complex computation, and are time-consuming and/or computing-intensive to obtain a better or optimal programming scheme. However, in an actual industrial production scenario, problems of industrial programming are usually very large in scale, and a large quantity of constraints and parameters are related. A production programming speed becomes an important link that restricts improvement of a production quantity.

Therefore, how to improve efficiency of industrial programming has become a current focus.

**SUMMARY**

Embodiments of this application provide an industrial programming scheme.

According to a first aspect of this application, an industrial production planning method is provided. The method includes: obtaining a first group of constraints for a plurality of production planning parameters in an industrial production planning job, where the plurality of production planning parameters include at least a production quantity of a producer; constructing, based on the first group of constraints, a cut constraint associated with at least one integer parameter in the plurality of production planning parameters; constructing a second group of constraints based on the cut constraint and the first group of constraints, where a type of the at least one integer parameter in the second group of constraints is changed; and determining values of the plurality of production planning parameters based on the second group of constraints, to generate a production plan for the production planning job.

For example, the production planning job may be determining a production arrangement about a plurality of producers to complete a predetermined production plan. Correspondingly, for example, the production plan may indicate a specific production plan of the plurality of producers. In some embodiments, a device the same as or different from a device that determines the values of the plurality of production planning parameters can generate the production plan based on the determined values of the plurality of production planning parameters.

In this embodiment of this application, the industrial production planning job is converted into the first group of constraints (for example, a mixed integer programming MIP problem), and a cut constraint (also referred to as a cutting plane constraint) associated with an integer parameter (also referred to as an integer variable) is constructed based on the MIP problem, without depending on a conventional solving result based on a relaxation model. In addition, the cut constraint is further applied to construct a relaxation model of the MIP problem, to guide solving of the MIP problem. It should be understood that the "constraint" may represent a limitation on a value range of a parameter and/or a constraint relationship that should be satisfied between different parameters, or the like.

In addition, in this embodiment of this application, the cut constraint and the first group of constraints are further used to construct the second group of constraints, to serve as the relaxation model of the MIP problem. In the relaxation model, the type of the at least one integer parameter may be changed. For example, a value of the at least one integer parameter may be a real number and does not necessarily be an integer.

Based on this manner, in this embodiment of this application, the cut constraint corresponding to the integer parameter can be generated based on a problem structure of a programming model, so that the constructed relaxation model can obtain an optimal solution closer to the MIP problem, and a relaxation model with higher solving quality can be constructed. For example, the problem structure may indicate a solution space constraint, a time constraint, or a sequence constraint between parameters, or may indicate an expression characteristic of a constraint related to a variable. In addition, after a solution of higher quality based on the relaxation model is obtained, a final solution of the MIP problem may be obtained based on less computation costs in a subsequent solving process. Therefore, in this embodiment of this application, time costs or computation costs for industrial production planning can be reduced, thereby improving efficiency of industrial production planning.

In some embodiments of the first aspect, the obtaining a first group of constraints for an industrial production planning job includes: determining job information associated with the industrial production planning job from a user input, where the job information indicates at least the plurality of production planning parameters to be determined, parameter constraints related to the values of the plurality of production planning parameters, and a production planning target related to the industrial production planning job; and constructing the first group of constraints based on the job information.

In this manner, in this embodiment of this application, the first group of constraints is automatically generated based on the user input, that is, the MIP problem corresponding to the industrial production planning job is constructed based on the user input. Therefore, in this embodiment of this application, a more friendly interaction manner can be provided for a user, and learning costs of the user about how to construct a constraint or express a constraint are reduced, thereby improving the efficiency of industrial production planning.

In some embodiments of the first aspect, the constructing, based on the first group of constraints, a cut constraint associated with at least one integer parameter in the plurality of production planning parameters includes: identifying the at least one integer parameter from the plurality of production planning parameters; determining, from the first group of constraints, a target constraint associated with the at least one integer parameter; and constructing, based on the target constraint, the cut constraint associated with the at least one integer parameter.

In this manner, in this embodiment of this application, the corresponding cut constraint can be constructed based on a problem structure of a constraint related to an integer parameter in the MIP problem. Therefore, in this embodiment of this application, the cut constraint is no longer constructed depending on a previous solving result, and solution space is reduced before the relaxation model starts to be solved, so that efficiency of an entire solving process can be effectively improved, and the constructed cut constraint can reflect information about an original problem structure in the MIP problem.

In some embodiments of the first aspect, the constructing, based on the first group of constraints, a cut constraint associated with at least one integer parameter in the plurality of parameters includes: determining, from the user input, an identifier of a cut construction scheme for constructing the cut constraint; determining a target construction scheme based on the identifier from a group of cut constraint construction schemes; and constructing, based on the target construction scheme, the cut constraint associated with the at least one integer parameter.

In this manner, in this embodiment of this application, a group of optional cut constraint construction schemes can be provided for the user, so that the user can select a required cut constraint construction scheme in a personalized manner based on an actual requirement. Therefore, the user can select more effective cut constraint construction scheme based on the actual requirement to improve the efficiency of industrial production planning.

In some embodiments of the first aspect, the group of cut constraint construction schemes include at least one of the following: a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme. It should be understood that the cut constraint scheme aims to construct the corresponding cut constraint based on a problem structure of the target constraint, without depending on a solving result of a variable. Any other appropriate cut constraint scheme is also feasible.

In some embodiments of the first aspect, the constructing a second group of constraints based on the cut constraint and the first group of constraints includes: converting the first group of constraints into a corresponding group of relaxation constraints by removing an integer value constraint of the at least one integer parameter; and constructing the second group of constraints based on the cut constraint and the group of relaxation constraints.

In this manner, in this embodiment of this application, the constructed cut constraint and a group of relaxation constraints (that is, a linear programming problem) corresponding to the first group of constraints (that is, the original MIP problem) can be used together to form the second group of constraints, that is, the relaxation model corresponding to the MIP problem. Therefore, in this embodiment of this application, solving quality of the relaxation model can be improved, thereby improving the overall efficiency of industrial production planning.

According to a second aspect of this application, an industrial programming method is provided. The method includes: obtaining a first group of constraints for a plurality of parameters in an industrial programming job; constructing, based on the first group of constraints, a cut constraint associated with at least one integer parameter in the plurality of parameters; constructing a second group of constraints based on the cut constraint and the first group of constraints, where a type of the at least one integer parameter in the second group of constraints is changed; and determining values of the plurality of parameters based on the second group of constraints, to generate a programming scheme for the industrial programming job.

In this embodiment of this application, the industrial programming job is converted into the first group of constraints (for example, a mixed integer programming MIP problem), and a cut constraint (also referred to as a cutting plane constraint) associated with an integer parameter (also referred to as an integer variable) is constructed based on the MIP problem, without depending on a conventional solving result based on a relaxation model. In addition, such a cut constraint is further applied to construct a relaxation model of the MIP problem, to guide solving of the MIP problem.

In addition, in this embodiment of this application, the cut constraint and the first group of constraints are further used to construct the second group of constraints, to serve as the relaxation model of the MIP problem. In the relaxation model, the type of the at least one integer parameter may be changed. For example, a value of the at least one integer parameter may be a real number and does not necessarily be an integer.

Based on this manner, in this embodiment of this application, the cut constraint corresponding to the integer parameter can be generated based on a problem structure of a programming model, so that the constructed relaxation model can obtain an optimal solution closer to the MIP problem, and a relaxation model with higher solving quality can be constructed. For example, the problem structure may indicate a solution space constraint, a time constraint, or a sequence constraint between parameters, or may indicate an expression characteristic of a constraint related to a variable. In addition, after a solution of higher quality based on the relaxation model is obtained, a final solution of the MIP problem may be obtained based on less computation costs in a subsequent solving process. Therefore, in this embodiment of this application, time costs or computation costs for industrial programming can be reduced, thereby improving efficiency of industrial programming.

In some embodiments of the second aspect, the constructed programming scheme may be stored. Alternatively or additionally, the constructed programming scheme may be output appropriately. In some embodiments of the second aspect, the constructed programming scheme may further be sent to a corresponding body to guide execution of the industrial programming job.

In some embodiments of the second aspect, the industrial programming job includes one of the following: an industrial production planning job, a resource scheduling job, a route programming job, or a target location job. For example, the industrial production planning job can be a programming scheme for guiding different producers to perform production. The resource scheduling job may include a plurality of types, for example, an electricity scheduling job for guiding electricity resource scheduling, a production scheduling job for guiding scheduling of different production resources, and a logistics scheduling job for guiding a logistics company to schedule logistics vehicles and distribution personnel resources. For example, the route programming job may include a vehicle route programming job for guiding routes for different delivery vehicles to deliver goods. This is also referred to as a vehicle routing problem (Vehicle Routing Problem, VRP). For example, the target location job may include a facility location job for guiding location of a specific enterprise or facility, which is also referred to as a facility location problem (Facility Location Problem). It should be understood that the industrial programming job discussed in this application may further include, for example, another type of industrial programming job that can be represented by one or more MIP models.

In some embodiments of the second aspect, the obtaining a first group of constraints for an industrial programming job includes: determining job information associated with the industrial programming job from a user input, where the job information indicates at least the plurality of parameters to be determined, parameter constraints related to the values of the plurality of parameters, and a target related to the industrial programming job; and constructing the first group of constraints based on the job information.

For example, for the resource scheduling job for a production line, the plurality of parameters to be determined may include a production arrangement of each production line and/or a production arrangement of each machine in each production line. The parameter constraint may include, for example, a production capacity of each machine. A target related to the resource scheduling job may include, for example, minimizing total production man-hours.

In this manner, in this embodiment of this application, the first group of constraints is automatically generated based on the user input, that is, the MIP problem corresponding to the industrial programming job is constructed based on the user input. Therefore, in this embodiment of this application, a more friendly interaction manner can be provided for a user, and learning costs of the user about how to construct a constraint or express a constraint are reduced, thereby improving the efficiency of industrial programming.

In some embodiments of the second aspect, the constructing, based on the first group of constraints, a cut constraint associated with at least one integer parameter in the plurality of parameters includes: identifying the at least one integer parameter from the plurality of parameters; determining, from the first group of constraints, a target constraint associated with the at least one integer parameter; and constructing, based on the target constraint, the cut constraint associated with the at least one integer parameter.

In this manner, in this embodiment of this application, the corresponding cut constraint can be constructed based on a problem structure of a constraint related to an integer parameter in the MIP problem. Therefore, in this embodiment of this application, the cut constraint is no longer constructed depending on a previous solving result. In other words, in the scheme provided in this application, the cut constraint may be directly constructed based on the problem, and the problem does not need to be solved first. In this way, the efficiency of the entire programming process can be improved, so that the constructed cut constraint can reflect information about an original problem structure in the MIP problem.

In some embodiments of the second aspect, the constructing, based on the first group of constraints, a cut constraint associated with at least one integer parameter in the plurality of parameters includes: determining, from the user input, an identifier of a cut construction scheme for constructing the cut constraint; determining a target construction scheme based on the identifier from a group of cut constraint construction schemes; and constructing, based on the target construction scheme, the cut constraint associated with the at least one integer parameter.

In this manner, in this embodiment of this application, a group of optional cut constraint construction schemes can be provided for the user, so that the user can select a required cut constraint construction scheme in a personalized manner based on an actual requirement. Therefore, the user can select more effective cut constraint construction scheme based on the actual requirement to improve the efficiency of industrial programming.

In some embodiments of the second aspect, the group of cut constraint construction schemes include at least one of the following: a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme. It should be understood that the cut constraint scheme aims to construct the corresponding cut constraint based on a problem structure of the target constraint, without depending on a solving result of a variable. Any other appropriate cut constraint scheme is also feasible.

In some embodiments of the second aspect, the constructing a second group of constraints based on the cut constraint and the first group of constraints includes: converting the first group of constraints into a corresponding group of relaxation constraints by removing an integer value constraint of the at least one integer parameter; and constructing the second group of constraints based on the cut constraint and the group of relaxation constraints.

In this manner, in this embodiment of this application, the constructed cut constraint and a group of relaxation constraints corresponding to the first group of constraints (that is, the original MIP problem) can be used together to form the second group of constraints, that is, the relaxation model corresponding to the MIP problem. Therefore, in this embodiment of this application, the constructed relaxation model can obtain the optimal solution closer to the MIP problem, so that solving quality of the relaxation model can be improved, thereby improving the overall efficiency of industrial programming.

According to a third aspect of this application, a resource scheduling scheme programming method is provided. The method includes: obtaining a first group of constraints for a plurality of scheduling parameters in a resource scheduling job; constructing, based on the first group of constraints, a cut constraint associated with at least one integer parameter in the plurality of scheduling parameters; constructing a second group of constraints based on the cut constraint and the first group of constraints, where a type of the at least one integer parameter in the second group of constraints is changed; and determining values of the plurality of production planning parameters based on the second group of constraints, to generate a scheduling plan for the resource scheduling job.

Based on this manner, in this embodiment of this application, the cut constraint corresponding to the integer parameter can be generated based on a problem structure of a programming model, so that a relaxation model with higher solving quality can be constructed. Therefore, in this embodiment of this application, time costs or computation costs for scheduling plan programming can be reduced, thereby improving efficiency of scheduling plan programming.

In some embodiments of the third aspect, the obtaining a first group of constraints for a resource scheduling job includes: determining job information associated with the resource scheduling job from a user input, where the job information indicates at least the plurality of scheduling parameters to be determined, parameter constraints related to the values of the plurality of scheduling parameters, and a scheduling target related to the resource scheduling job; and constructing the first group of constraints based on the job information.

In this manner, in this embodiment of this application, the first group of constraints is automatically generated based on the user input, that is, the MIP problem corresponding to the resource scheduling job is constructed based on the user input. Therefore, in this embodiment of this application, a more friendly interaction manner can be provided for a user, and learning costs of the user about how to construct a constraint or express a constraint are reduced, thereby improving the efficiency of scheduling scheme programming.

In some embodiments of the third aspect, the constructing, based on the first group of constraints, a cut constraint associated with at least one integer parameter in the plurality of production planning parameters includes: identifying the at least one integer parameter from the plurality of production planning parameters; determining, from the first group of constraints, a target constraint associated with the at least one integer parameter; and constructing, based on the target constraint, the cut constraint associated with the at least one integer parameter.

In this manner, in this embodiment of this application, the corresponding cut constraint can be constructed based on a problem structure of a constraint related to an integer parameter in the MIP problem. Therefore, in this embodiment of this application, the cut constraint is no longer constructed depending on a previous solving result, so that the constructed cut constraint can reflect information about an original problem structure in the MIP problem.

In some embodiments of the third aspect, the constructing, based on the first group of constraints, a cut constraint associated with at least one integer parameter in the plurality of parameters includes: determining, from the user input, an identifier of a cut construction scheme for constructing the cut constraint; determining a target construction scheme based on the identifier from a group of cut constraint construction schemes; and constructing, based on the target construction scheme, the cut constraint associated with the at least one integer parameter.

In this manner, in this embodiment of this application, a group of optional cut constraint construction schemes can be provided for the user, so that the user can select a required cut constraint construction scheme in a personalized manner based on an actual requirement. Therefore, the user can select more effective cut constraint construction scheme based on the actual requirement to improve the efficiency of industrial production planning.

In some embodiments of the third aspect, the group of cut constraint construction schemes include at least one of the following: a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme. It should be understood that the cut constraint scheme aims to construct the corresponding cut constraint based on a problem structure of the target constraint, without depending on a solving result of a variable. Any other appropriate cut constraint scheme is also feasible.

In some embodiments of the third aspect, the constructing a second group of constraints based on the cut constraint and the first group of constraints includes: converting the first group of constraints into a corresponding group of relaxation constraints by removing an integer value constraint of the at least one integer parameter; and constructing the second group of constraints based on the cut constraint and the group of relaxation constraints.

In this manner, in this embodiment of this application, the constructed cut constraint and a group of relaxation constraints (that is, a linear programming problem) corresponding to the first group of constraints (that is, the original MIP problem) can be used together to form the second group of constraints, that is, the relaxation model corresponding to the MIP problem. Therefore, in this embodiment of this application, solving quality of the relaxation model can be improved, thereby improving the overall efficiency of scheduling scheme programming.

According to a fourth aspect of this application, an industrial production planning apparatus is provided. The apparatus includes a constraint obtaining unit, a cut constraint construction unit, a constraint relaxation unit, and a production planning unit. These units in the apparatus are configured to perform the method according to the first aspect.

According to a fifth aspect of this application, an industrial programming apparatus is provided. The apparatus includes a constraint obtaining unit, a cut constraint construction unit, a constraint relaxation unit, and a programming unit. These units in the apparatus are configured to perform the method according to the second aspect.

According to a sixth aspect of this application, a resource scheduling scheme programming apparatus is provided. The apparatus includes a constraint obtaining unit, a cut constraint construction unit, a constraint relaxation unit, and a scheduling programming unit. These units in the apparatus are configured to perform the method according to the third aspect.

According to a seventh aspect of this disclosure, an electronic device is provided, including: at least one computing unit; and at least one memory. The at least one memory is coupled to the at least one computing unit and stores instructions to be executed by the at least one computing unit. When the instructions are executed by the at least one computing unit, the device is enabled to perform the method according to the first aspect, the second aspect, or the third aspect.

According to an eighth aspect of this disclosure, a computer-readable storage medium is provided. The computer-readable storage medium stores one or more computer instructions, and the one or more computer instructions are executed by a processor to implement the method according to the first aspect, the second aspect, or the third aspect.

According to a ninth aspect of this disclosure, a computer program product is provided. When the computer program product runs on a computer, the computer is enabled to perform instructions of some or all steps of the method according to the first aspect, the second aspect, or the third aspect.

It may be understood that the apparatuses in the fourth aspect to the sixth aspect, the electronic device in the seventh aspect, the computer storage medium in the eighth aspect, or the computer program product in the ninth aspect are all configured to perform the method provided in the first aspect, the second aspect, or the third aspect. Therefore, explanations or descriptions in the first aspect, the second aspect, or the third aspect are also applicable to the fourth aspect, the fifth aspect, the sixth aspect, the seventh aspect, the eighth aspect, and the ninth aspect. In addition, for beneficial effect that can be achieved in the fourth aspect, the fifth aspect, the sixth aspect, the seventh aspect, the eighth aspect, and the ninth aspect, refer to beneficial effect in corresponding methods. Details are not described herein again.

## BRIEF DESCRIPTION OF DRAWINGS

The foregoing and other features, advantages, and aspects of embodiments of this application become more obvious with reference to the accompanying drawings and with reference to the following detailed descriptions. In the accompanying drawings, same or similar reference numerals represent same or similar elements.

FIG. 1 is a flowchart of a conventional process of solving an MIP problem;
FIG. 2 is a schematic diagram of an example environment in which a plurality of embodiments of this application can be implemented;

FIG. 3 is a flowchart of an example process of industrial programming according to some embodiments of this application;

FIG. 4 is a flowchart of an example process of solving an MIP problem by using an MIP solver according to some embodiments of this application;

FIG. 5 is a schematic diagram of industrial production according to some embodiments of this application;

FIG. 6 is a performance comparison diagram between a production planning process according to some embodiments of this application and a conventional production planning process;

FIG. 7 is a schematic diagram of resource scheduling according to some embodiments of this application;

FIG. 8A to FIG. 8C are block diagrams of apparatuses according to some embodiments of this application; and

FIG. 9 is a block diagram of a computing device that can implement a plurality of embodiments of this application.

## DESCRIPTION OF EMBODIMENTS

The following describes embodiments of this application in detail with reference to the accompanying drawings. Although some embodiments of this application are shown in the accompanying drawings, it should be understood that this application may be implemented in various forms, and should not be construed as being limited to the embodiments described herein. On the contrary, these embodiments are provided so that this application will be thoroughly and fully understood. It should be understood that the accompanying drawings and embodiments of this application are merely used as examples, but are not intended to limit the protection scope of this application.

In descriptions of embodiments of this application, the term "include" and similar terms thereof should be understood as open inclusion, that is, "include but are not limited to". The term "based" should be understood as "at least partially based". The terms "one embodiment" or "the embodiment" should be understood as "at least one embodiment". The terms "first", "second", and the like may indicate different or same objects. Other explicit and implicit definitions may also be included below.

As discussed above, the industrial programming problem is a common problem in people's production life. For example, people need to arrange production planning of different factories to implement a predetermined production plan, or people need to arrange logistics and distribution schemes of different goods. Most of such industrial programming problems may be represented as mixed integer programming MIP problems, and may be represented by MIP models. For example, such an MIP model can be represented as follows:

$$\min_{x_1,\dots,x_n;y_1,\dots,y_m} \sum_{i=1}^{n} c_i x_i + \sum_{i=1}^{n} d_j y_j \qquad (1)$$

s.t.

$$\sum_{i=1}^{n} a_{l_i} x_i + \sum_{j=1}^{m} e_{l_j} y_j \le b^{(l)}; l = 1,\dots,q \qquad (2)$$

$$0 \le x_i \le x_i^{up}; i = 1,\dots,n \qquad (3)$$

$$0 \le y_j \le y_j^{up}; j = 1,\dots,m \qquad (4)$$

Formula (1) represents a target that is associated with an industrial programming job and that is also referred to as a decision-making target. Formula (2) to formula (4) represent parameter constraints that are associated with values of a plurality of parameters and that are also referred to as decision-making constraints. $x_i$ and $y_j$ represent the plurality of parameters to be determined, also referred to as decision-making variables. Some of $x_i$ and $y_j$ are integer parameters, that is, values should be integers. $c_i$ and $d_j$ are coefficients of the decision-making variables in the target. $a_{l_i}$ and $e_{l_j}$ are coefficients of the decision-making variables in the constraints. $b^{(l)}$ is a constant in the constraints. $x_i^{up}$ and $y_j^{up}$ are upper bounds of the decision-making variables. $x_i$ is a complex variable. An integer variable needs to be from some of the variables. Certainly, not all of $x_i$ are required to be integers. $y_j$ is a non-complex variable. In other words, a result of such a variable can be represented by a floating point number.

Conventionally, MIP problem solving methods can be divided into two types: a heuristic method, which tries to embed a constraint into a heuristic search rule and directly solves a problem; and the other method, which directly invokes a mathematical programming solver to solve a problem. Currently, there are many solvers for solving MIP problems.

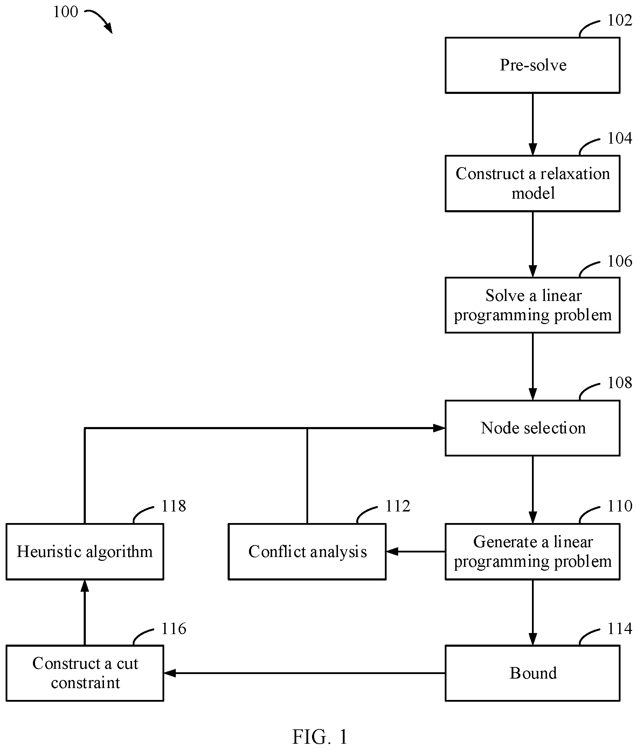

In a conventional process of solving MIP by using an MIP solver, the MIP solver usually obtains a solution of an original MIP problem by relaxing the MIP problem into a linear programming LP problem and solving the LP problem. FIG. 1 is a flowchart of a conventional process 100 of solving an MIP problem.

As shown in FIG. 1, in step 102, the MIP problem is pre-solved (pre-solve), to reduce a scale of the MIP problem. In step 104, a value of an integer parameter is extended from an integer type to a floating-point type, to construct a relaxation model, that is, a linear programming model. In step 106, a linear programming problem may be solved according to an appropriate method.

In step 108, each integer parameter node is traversed based on a solving result of the linear programming problem, and whether a current value of the integer parameter is an integer is determined. If the value is an integer, the process may proceed to a next integer parameter node. If the value is not an integer, the process may proceed to step 110. In step 110, a new linear programming problem may be generated based on the integer parameter.

In some cases, in step 112, whether there is a conflict with another constraint may be determined based on a possible integer solution of a current integer variable, that is, a conflict analysis is performed. If there is no conflict, the next integer parameter node may be analyzed. On the contrary, if there is a conflict, the new linear programming problem needs to be solved.

In step 114, a bound (bound) of the integer parameter may be determined based on a solving result of the new linear programming problem. In step 116, a cut constraint Cuts (also referred to as a cutting plane constraint) may be constructed based on a bounding result. In step 118, a model to which the cut constraint is added is simplified according to a heuristic algorithm, for example, a redundant constraint is removed.

It can be learned that, in the conventional process (for example, the process 100) of solving the MIP problem, a cut constraint construction module is directly added after an original branching step, to complete better decision-making. However, such a cut constraint is always constructed based on a solving result of a previous linear programming model. Therefore, a cut constraint included in a problem structure cannot be constructed. In such a process, a cut constraint is introduced in a plurality of branch-and-bound processes, which also increases computation costs of solving an MIP problem, and thereby reduces efficiency of industrial programming.

**Example environment**

Embodiments of this application provide an industrial programming scheme. In embodiments of this application, the programming device obtains a first group of constraints for a plurality of parameters to be determined in an industrial programming job. For example, the first group of constraints may be represented by using an MIP model, and the plurality of parameters to be determined may include a decision-making variable in the MIP model. Further, the programming device constructs, based on the first group of constraints, a cut constraint associated with at least one integer parameter in the plurality of parameters.

Further, the cut constraint and the first group of constraints are used to construct a second group of constraints, that is, a relaxation model of the MIP model. A type of the at least one integer parameter in the second group of constraints is changed, for example, converted from the integer parameter to a floating-point parameter. The programming device determines values of the plurality of parameters based on the second group of constraints, to generate a programming scheme for the industrial programming job. In this manner, in embodiments of this application, a cut constraint can be added in a phase of constructing an initial relaxation model, thereby improving quality of solving the initial relaxation model. This can further reduce computation and time costs, thereby improving efficiency of industrial programming.

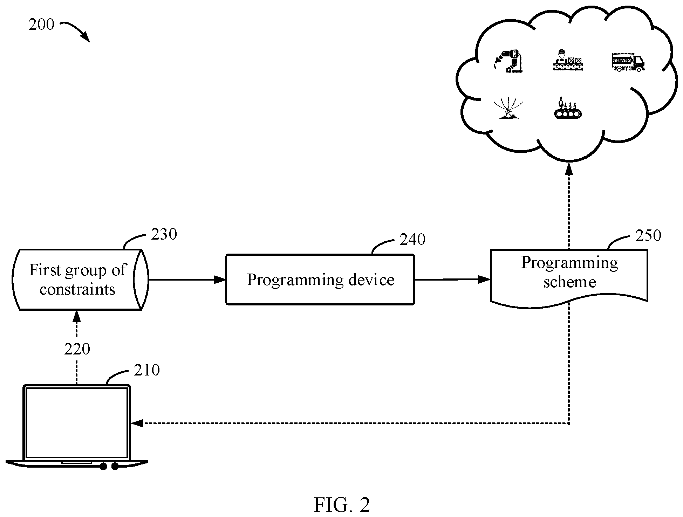

FIG. 2 is a schematic diagram of an example environment 200 in which a plurality of embodiments of this application can be implemented. As shown in FIG. 2, an environment 200 includes a programming device 240, and the programming device 240 is configured to obtain a first group of constraints 230. As discussed above, for example, the first group of constraints 230 may be represented as an MIP model discussed with reference to the formulas (1) to (4).

In some embodiments, the first group of constraints 230 may be determined, for example, based on a user input 220. For example, a user may input, by using a terminal device 210, job information associated with an industrial programming job. For example, industrial production planning is used as an example. For example, the user may enter, by using the terminal device 210, a plurality of parameters to be determined, for example, a daily production quantity of each factory. In addition, the user may further input a constraint associated with values of the plurality of parameters. For example, a daily quantity of each factory should be less than or equal to an upper limit of the daily production quantity. Further, the user may further enter a target associated with the industrial programming job (for example, a production planning job), for example, maximizing profits, minimizing processing costs, minimizing processing time, and the like.

In some embodiments, the terminal device 210 may generate the first group of constraints 230 based on the user input 220, and send the first group of constraints 230 to the programming device 240, for example, through wired or wireless communication. Alternatively, the terminal device 210 may send related information of the user input 210 to the programming device 240, and the programming device 240 constructs the first group of constraints 230 based on the user input 210.

In some embodiments, for example, the first group of constraints 230 may alternatively be automatically generated by the programming device 240. For example, the programming device 240 may, for example, automatically generate the first group of constraints 230 associated with the industrial production planning job according to a pre-executed production plan. Alternatively, the programming job 240 may, for example, automatically generate the first group of constraints 230 associated with a route programming job, for example, based on to-be-delivered logistics information obtained from a logistics website.

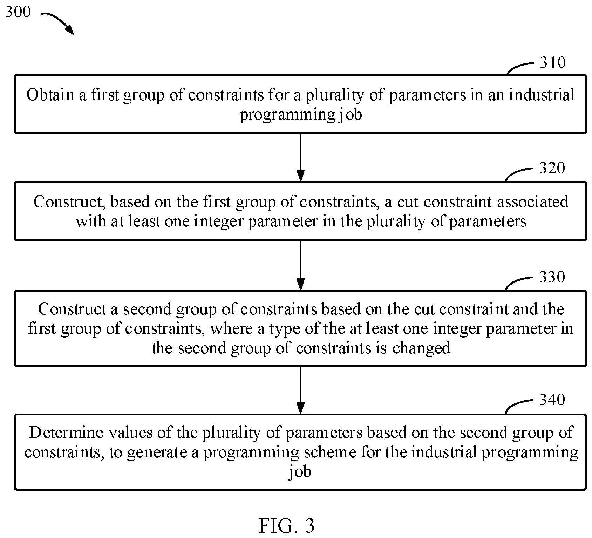

As shown in FIG. 2, the programming device 240 may determine, based on the first group of constraints 230, the values of the plurality of parameters included in the first constraint 230, to generate a programming scheme 250 for the industrial programming job. A detailed process of industrial programming is described in detail below with reference to FIG. 3. Details are not described herein.

It should be understood that types of generated programming schemes 250 may vary according to different specific industrial programming jobs. For example, an industrial production planning job is used as an example. A programming scheme 250 may be, for example, a production scheme for guiding industrial production planning. For example, the production scheme may be sent to a plurality of producers, to guide the producers to perform production jobs according to the production scheme. In another example, a route programming job is used as an example. The programming scheme 250 may be, for example, a distribution scheme for guiding logistics distribution. For example, such a distribution scheme may be sent to a plurality of distribution parties, to guide the plurality of distribution parties to perform logistics distribution jobs according to the distribution scheme.

In some embodiments, the programming scheme 250 may alternatively be sent, for example, to the terminal device 210, so that the terminal device 210 can provide information related to the generated programming scheme 250 to the user. For example, the terminal device 210 may present, to the user by using a graphical user interface displayed on a screen, the values of the plurality of parameters indicated by the programming scheme 250. Alternatively, in another example, the programming scheme 250 may be sent to the terminal device 210 as an independent document, so that the user can open the document by using the terminal device 210 to view the programming scheme. It should be understood that the programming scheme 250 may alternatively be organized in another appropriate file format and provided to the user. Industrial production planning is used as an example. The terminal device 210 may obtain a production scheme from the programming device 240, and may intuitively present a production planning arrangement of each producer to the user by using the graphical user interface, so that the user can more intuitively understand the generated programming scheme.

In some embodiments, the terminal device 210 may further provide, for example, an editing interface for the user, so that the user can adjust the provided programming scheme 250 by using the editing interface.

In some embodiments, information related to the programming scheme 250 may alternatively be provided to the user in another appropriate manner. For example, the programming scheme 250 may be sent to an email box of the user as content of an email body or in a form of an email attachment. Alternatively, the programming scheme 250 may be sent to the user through another appropriate tool (for example, an instant messaging tool or a short message application).

In some embodiments, the programming scheme 250 may alternatively be stored by the programming device 240 in a coupled storage device for user acquisition. For example, the programming device 240 may store the generated programming scheme 250 in a network storage device and make it accessible over the internet. For example, the user may use another terminal device to access the network storage device to obtain the generated programming scheme. For example, the programming device 240 may send storage location information (for example, a link address) of the programming scheme 250 to the terminal device 210, so that the user can download the programming scheme based on the storage location information.

It should be understood that, although the terminal device 210 and the programming device 240 are shown as different entities in FIG. 2, they may also be implemented by a single electronic device. For example, the user may input the job information related to the industrial programming job to the electronic device, and the electronic device constructs the first group of constraints based on the job information, and correspondingly generates the programming scheme 250.

**Example process of industrial programming**

The following describes an industrial programming process according to embodiments of this application with reference to FIG. 3. FIG. 3 is a flowchart of an example process 300 of industrial programming according to embodiments of this application. The process 300 may be implemented, for example, by the programming device 240 in FIG. 2. For ease of description, the following describes the process 300 with reference to FIG. 2.

As shown in FIG. 3, in step 310, the programming device 240 obtains a first group of constraints 230 for a plurality of parameters in an industrial programming job. As discussed with reference to FIG. 2, the first group of constraints 230 may be represented as an MIP model described according to the formulas (1) to (4).

The process 300 discussed in this application may be applied to different types of industrial programming jobs. In some embodiments, the industrial programming job may include an industrial production planning job, for example, for guiding production of a producer.

In some embodiments, the industrial programming job may include a resource scheduling job. The resource scheduling job may include, for example, but is not limited to: an electricity scheduling job for guiding electricity resource scheduling, a production scheduling job for guiding scheduling of different production resources, and a logistics scheduling job for guiding a logistics company to schedule logistics vehicles and distribution personnel resources.

In some embodiments, the industrial programming job may include a route programming job. For example, the route programming job may include a vehicle route programming job for guiding routes for different delivery vehicles to deliver goods. This is also referred to as a vehicle routing problem (Vehicle Routing Problem, VRP).

In some embodiments, the industrial programming job may include a target location job. For example, the target location job may include a facility location job for guiding location of a specific enterprise or facility, which is also referred to as a facility location problem (Facility Location Problem).

It should be understood that the industrial programming job discussed in this application may further include, for example, another industrial programming job that can be represented by one or more MIP models.

In some embodiments, as discussed above with reference to FIG. 2, the first group of constraints 230 may be constructed based on a user input 220. Specifically, the programming device 240 may determine, from the user input 220, job information associated with the industrial programming job. The job information may indicate at least the plurality of parameters (also referred to as decision-making variables) to be determined, parameter constraints (also referred to as decision-making constraints) related to values of the plurality of parameters, and a target (also referred to as a decision-making target) related to the industrial programming job. Further, the programming device 240 may construct the first group of constraints 230 based on the job information.

In some embodiments, as discussed with reference to FIG. 2, for example, the first group of constraints 230 may alternatively be automatically generated by the programming device 240. For example, the programming device 240 may, for example, automatically generate the first group of constraints 230 associated with the industrial production planning job according to a pre-executed production plan. Alternatively, the programming job 240 may, for example, automatically generate the first group of constraints 230 associated with a route programming job, for example, based on to-be-delivered logistics information obtained from a logistics website.

It should be understood that the plurality of parameters that are to be determined and that are related to the first group of constraints 230 may have different meanings based on different types of industrial programming jobs. For example, industrial production planning is used as an example. The plurality of parameters to be determined may include, for example, a daily production quantity of each producer. Logistics delivery route programming is used as an example. The plurality of parameters to be determined may include a weight of goods delivered by each logistics vehicle, and the like. It should be understood that, depending on a specific industrial programming job, the plurality of parameters to be determined in this application have specific industrial meanings.

In step 320, the programming device 240 constructs, based on the first group of constraints 230, a cut constraint associated with at least one integer parameter in the plurality of parameters.

In some implementations, different from a conventional process of solving an MIP problem, the programming device 240 may construct a related cut constraint based on an original MIP problem. Specifically, the programming device 240 may first identify the at least one integer parameter from the plurality of parameters. For example, the programming device 240 may determine, based on descriptions of the parameters, which parameters are integer parameters and which parameters are floating-point parameters. For example, the programming device 240 may further add a specific label to an integer parameter in the plurality of parameters, to facilitate subsequent construction of a cut constraint for the integer parameter.

Further, the programming device 240 may determine, from the first group of constraints 230, a target constraint associated with the at least one integer parameter. In some embodiments, for the at least one integer parameter, the programming device 240 may screen, from the first group of constraints 230, a constraint including the at least one integer parameter as the target constraint.

For example, for an integer parameter $x_t$, for example, the programming device 240 may determine that the target constraint that is included in the first group of constraints 230 and that is related to $x_t$ is as follows:

$$a_t * x_t + a_s * x_s \leq b_t \tag{5}$$

$x_t$ and $x_s$ are parameters to be determined. $a_t$ represents a decision-making coefficient associated with the

variable $x_t$. $a_s$ represents a decision-making coefficient associated with the variable $x_s$. $b_t$ is a constant. $t \in [1, 2, 3, ..., n]$. It should be understood that the formula (5) is merely an example, and the target constraint may include one or more other parameters different from the integer parameter $x_t$. Alternatively, the target constraint may include only the integer parameter $x_t$.

Further, the programming device 240 may constructs, based on the target constraint, the cut constraint associated with the at least one integer parameter in the plurality of parameters. In some implementations, the programming device 240 may construct, based on a predetermined cut constraint construction scheme, the cut constraint associated with the at least one integer parameter.

In some embodiments, for example, the programming device 240 may construct the cut constraint according to a probing cut constraint (Probing Cuts) construction scheme. An example in which the target constraint is the formula (5) is used as an example. The programming device 240 may perform calculation based on the target constraint:

$$f_t = b_t - a_t \lfloor b_t / a_t \rfloor \qquad (6)$$

$\lfloor \ \rfloor$ represents a rounding down operation. Further, the programming device 240 may determine whether $f_t$ is 0, and if $f_t$ is not 0, the programming device 240 may construct a probing cut constraint associated with the integer parameter $x_t$:

$$\overline{f_t} * x_t \leq f_t * \lceil b_t / a_t \rceil \qquad (7)$$

$\overline{f_t}$ represents a rounding-up integer value of $f_t$. $\lceil \ \rceil$ represents a rounding-up operation.

In some embodiments, for example, the programming device 240 may construct the cut constraint according to a gomory cut constraint (Gomory Cuts) construction scheme. An example in which the target constraint is the formula (5) is still used as an example. The programming device 240 may construct the cut constraint based on the target constraint:

$$b_t - \lfloor b_t \rfloor - (a_t - \lfloor a_t \rfloor) * x_t - (a_s - \lfloor a_s \rfloor) * x_s \leq 0 \qquad (8)$$

For the constraint (8), if neither $a_t - \lfloor a_t \rfloor$ nor $a_s - \lfloor a_s \rfloor$ is 0, the constraint (8) may be determined as a gomory cut constraint associated with the integer parameter $x_t$.

In some embodiments, another appropriate construction scheme may be used to construct a cut constraint related to the integer parameter. The construction scheme aims to construct a new cut constraint based on a problem structure of the constraint. An example of the construction scheme may further include but is not limited to an intersection cut (Intersection Cuts) constraint construction scheme, a T-space cut (T-space Cuts) constraint construction scheme, a lower bound conflict-driven cut (lower bounds conflict-driven cuts) constraint construction scheme, and the like. Details about these cut constraint schemes are not described in detail again.

In some embodiments, a construction scheme for constructing the cut constraint may alternatively be determined based on the user input. For example, the programming device 240 may determine, from the user input, an identifier of the cut construction scheme for constructing the cut constraint, and determine a target construction scheme based on the identifier from a group of cut constraint construction schemes. Further, the programming device 240 may constructs, based on the target construction scheme, the cut constraint associated with the at least one integer parameter in the plurality of parameters.

In some embodiments, the group of cut constraint construction schemes may include a group of schemes selected from the following construction schemes: probing cut constraint construction scheme, gomory cut constraint construction scheme, intersection cut constraint construction scheme, T-space cut constraint construction scheme, lower bound conflict-driven cut constraint construction scheme, and the like.

Still refer to FIG. 3. In step 330, the programming device 240 constructs a second group of constraints based on the cut constraint and the first group of constraints. A type of the at least one integer parameter in the second group of constraints is changed. In some embodiments, the second group of constraints may also be referred to as a relaxation model, that is, a linear programming model.

Specifically, the programming device 240 may convert the first group of constraints into a corresponding group of relaxation constraints by removing an integer value constraint of the at least one integer parameter. For example, a type of the integer parameter can be converted to a floating-point parameter. Further, the programming device 240 may construct the second group of constraints based on the cut constraint and the group of relaxation constraints.

The second group of constraints (that is, an initial relaxation model for solving) constructed in this manner includes a cut constraint constructed based on a problem structure of the first group of constraints. According to a mathematical programming theory, solution space of a new relaxation model is closer to solution space of the MIP problem, thereby improving solving performance of an entire process.

In step 340, the programming device 240 determines the values of the plurality of parameters based on the second group of constraints, to generate a programming scheme 250 for the industrial programming job.

It should be understood that the programming device 240 may use any appropriate process to solve the plurality of parameters based on the second group of constraints (for example, the relaxation model). For example, the programming device 240 may solve the MIP problem based on the relaxation model according to the process of the steps 106 to 118 discussed above with reference to FIG. 1. Alternatively, the programming device 240 may use an MIP solver discussed below to solve the MIP problem based on the constructed second group of constraints. This application is not intended to limit a specific process of determining the values of the plurality of parameters based on the second group of constraints.

In some embodiments, as discussed with reference to FIG. 2, after determining the values of the plurality of parameters, the programming device 240 may generate the programming scheme 250 for the industrial programming job to guide performance of the industrial programming job.

According to the industrial programming scheme discussed above, in this embodiment of this application, the industrial programming job can be converted into a corresponding programming model, and the cut constraint corresponding to the integer parameter is generated based on a problem structure of the programming model, so that the constructed relaxation model can obtain an optimal solution closer to the MIP problem, and a relaxation model with higher solving quality can be constructed. In this manner, in embodiments of this application, efficiency of industrial programming can be improved, time costs or computation costs for industrial programming can be reduced.

**MIP solver**

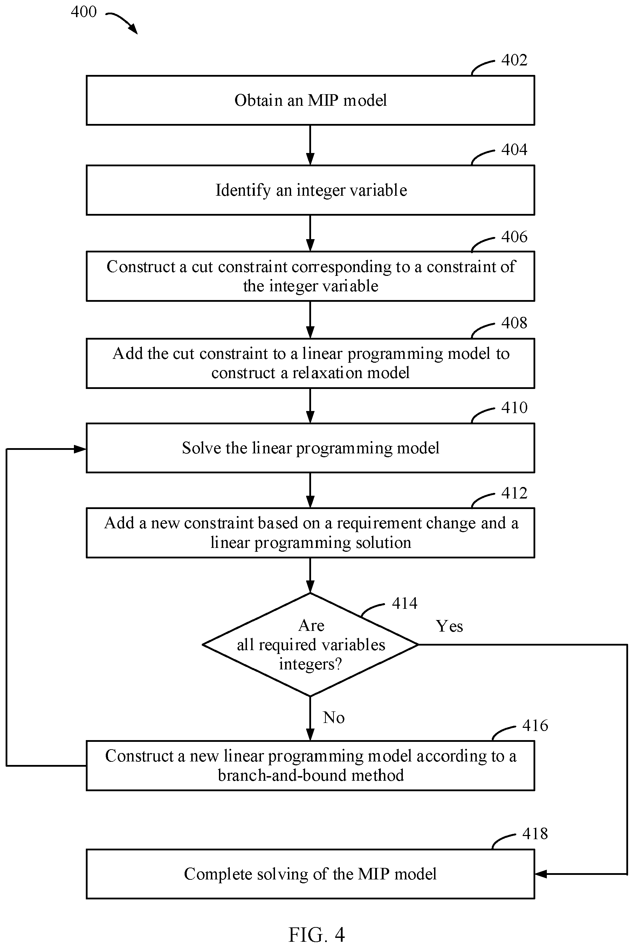

Embodiments of this application further provide an improved MIP solver that can be configured to solve an appropriate MIP problem. FIG. 4 is a flowchart of an example process 400 of solving an MIP problem by using an MIP solver according to embodiments of this application;

As shown in FIG. 4, in step 402, the MIP solver may obtain an MIP model. In step 404, the MIP solver may identify an integer variable (also referred to as an integer parameter) in the MIP problem. Specifically, the MIP solver may add a label to the integer variable in the MIP model, and mark a constraint on which the integer variable is located.

In step 406, the MIP solver may construct a cut constraint corresponding to the constraint on which the integer variable is located. The MIP solver may, for example, construct the cut constraint associated with the integer variable according to the process discussed above with reference to the step 320. In step 408, the MIP solver may add the constructed cut constraint to a linear programming model to construct a relaxation model. Specifically, the MIP solver may first relax the MIP model into an initial linear programming model, and determine a union set of the initial linear programming model and the constructed cut constraint as an initial relaxation model.

In step 410, the MIP solver may solve the constructed relaxation model (for example, the linear programming model). The MIP solver may solve the relaxation model according to any appropriate method. Examples of the method include but are not limited to: a simplex method, a dual simplex method, an interior point method, and the like.

In step 412, the MIP solver may add a new constraint based on a requirement change and a linear programming solution. It should be understood that step 414 is an optional step, and the MIP solver may add/delete/modify some constraints according to an actual requirement.

In step 414, the MIP solver may determine whether required variables are all integers. If it is determined in the step 414 that not all of the required variables are integers, the process 400 proceeds to step 416, and the MIP solver may use a branch-and-bound method to construct a new linear programming model.

A basic process of the branch-and-bound method includes: (a) Check: A solution result of a previous round is checked. If it is a first round, a solution result of a relaxation model LP is checked. If all variables that are required to be integers meet a constraint (that is, the variables are all integers), calculation stops. Otherwise, (b) is performed, and it is determined that branching is solved. (b) Branching: If a target of a problem is minimizing, a value Z of an optimal solution is set to $\infty$. According to a branching rule (Branching rule), a node is selected from nodes (local solutions) that are not yet fathomed (Fathomed) and is divided into several new nodes in a next level of the node. (c) Bounding: A lower bound (Lower bound, LB) of each new branched node is calculated. A fathoming condition test is performed on each node. If a node meets any of the following conditions, the node can be fathomed and is not considered. A lower bound of the node is greater than or equal to the value Z. A feasible solution with a minimum lower bound has been found in the node. If this condition is met, the feasible solution needs to be compared with the Z value. If the former is smaller, the Z value needs to be updated and considered as a value of the feasible solution. It is not possible for the node to include the feasible solution. (d) Recheck: Whether there is a node that is not fathomed is determined. If yes, (b) is returned. If no, calculation stops and an optimal solution is obtained.

Further, the process 400 may continue to return to the step 410 to solve the new linear programming model and repeat the steps 410, 412, and 414. On the contrary, if it is determined in the step 414 that the required variables are all integers, the process 400 proceeds to step 418, for example, the MIP solver completes solving of the MIP model.

According to the MIP solver in this embodiment of this application, a property of a constraint on which an integer variable is located and a mathematical structure can be fully used to construct cuts, so that a better relaxation model can be constructed. A solution of the relaxation model constructed in this manner can be closer to an optimal solution of the MIP model. In other words, in this embodiment of this application, a more compact (compact) relaxation model can be constructed. It should be understood that the MIP solver according to this embodiment of this application may be implemented by using hardware, software, or a combination of hardware and software.

**Example scenario 1: industrial production planning**

In an example scenario, an industrial programming scheme according to this application may be used for an industrial production planning job. The industrial production planning job is a typical large-scale, multi-objective, sparsely constrained, and multi-variable allocation problem. The following describes a production planning process according to embodiments of this application with reference to an industrial production planning scenario.

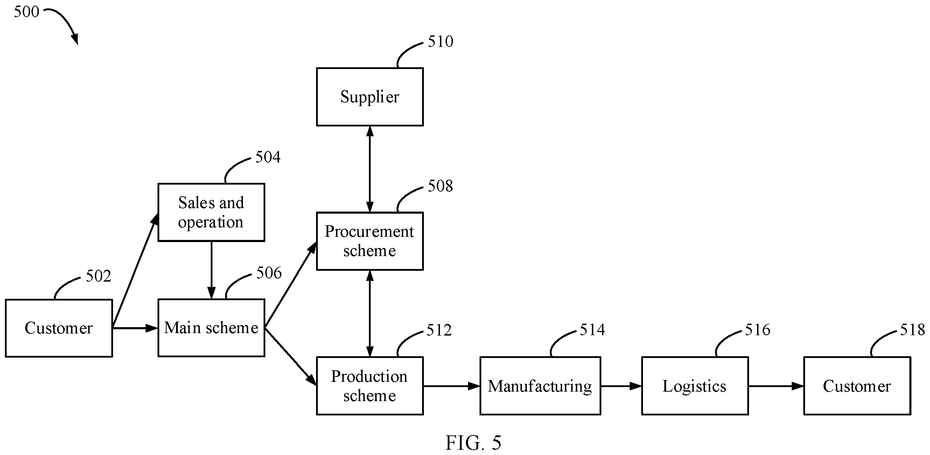

FIG. 5 is a schematic diagram 500 of industrial production according to embodiments of this application. As shown in FIG. 5, a main scheme 506 of production may be generated based on a requirement of a customer 502 or programming of sales and operation 504. The main scheme 506 may include a procurement scheme 508, to guide procurement from a supplier 510. The main scheme 506 may also include a production scheme 512, to guide the manufacturing process 514 of the producer. A produced product may be provided to a target customer 518 through logistics 516. It can be learned that, in an industrial production process, determination of the production scheme 512 will greatly affect efficiency of industrial production.

In a process of determining the production scheme 512, the production planning device (for example, the programming device 240 discussed with reference to FIG. 2) may obtain a first group of constraints for a plurality of production planning parameters in an industrial production planning job, and the plurality of production planning parameters may include at least a production quantity of the producer.

For example, the plurality of production planning parameters may include a production quantity of different product categories to be produced by each factory. Alternatively, the plurality of production planning parameters may further include transportation variables, inventory turnover variables, and the like of different semifinished product production factories. The first group of constraints may include, for example, order requirements required for production planning, production capacity upper limits of different factories, raw material upper limits, and unit costs during transportation. Generally, during production planning, all production-related quantities need to be integers, and unit price and the like may be represented by floating points.

In some embodiments, as discussed above with reference to FIG. 2 and FIG. 3, the production planning device may construct, for example, the first group of constraints based on a user input, that is, generate an MIP model represented by the formulas (1) to (4).

Further, the production planning device may construct, based on the first group of constraints, a cut constraint associated with at least one integer parameter in the plurality of production planning parameters. Specifically, the production planning device may identify an integer parameter in the plurality of production planning parameters, and locate a target constraint that includes the integer parameter in the first group of constraints.

In some embodiments, the production planning device may construct a corresponding cut constraint based on a determined problem structure of the target constraint. For example, the production planning device may construct the cut constraint based on the problem structure of the target constraint according to one or more of a probing cut constraint construction scheme, a gomory cut constraint construction scheme, an intersection cut constraint construction scheme, a T-space cut constraint construction scheme, and a lower bound conflict-driven cut constraint construction scheme.

Further, the production planning device may construct a second group of constraints based on the cut constraint and the first group of constraints. A type of the at least one integer parameter in the second group of constraints is changed. Specifically, the production planning device may convert the first group of constraints into a corresponding group of relaxation constraints by removing an integer value constraint of the at least one integer parameter. For example, a type of the integer parameter can be converted to a floating-point parameter. Further, the production planning device may construct the second group of constraints based on the cut constraint and the group of relaxation constraints.

The second group of constraints (that is, an initial relaxation model for solving) constructed in this manner includes a cut constraint constructed based on a problem structure of the first group of constraints. According to a mathematical programming theory, solution space of a new relaxation model is closer to solution space of the MIP problem, thereby improving solving performance of an entire process.

Further, the production planning device may determine values of the plurality of production planning parameters based on the second group of constraints, to generate a production plan for an industrial production planning job. It should be understood that the production planning device may use any appropriate process to solve the values of the plurality of production planning parameters in the first group of constraints based on the relaxation model. As an example, the production planning device may determine the values of the plurality of production planning parameters according to the steps 410 to 418 discussed with reference to FIG. 4.

For example, the production planning device may first use an appropriate method to solve the second group of constraints. The manner may include but are not limited to: a simplex method, a dual simplex method, an interior point method, and the like. Optionally, the production planning device may further perform model modification. In some embodiments, this is an optional function. The production planning device may perform only an optimality check by default. If this function is enabled, the production planning device can add/delete/modify some constraints based on an optimal solution in a previous step. In this way, a next model can be optimized based on a previous solution. This step occurs mainly in a random or incremental model in which a requirement constraint or a material constraint may change over time.

In addition, the production planning device may use an appropriate branch-and-bound method to obtain a solution (that is, the values of the plurality of production planning parameters in the first group of constraints) of the MIP problem based on a solution of the relaxation model (that is, the second group of constraints). A process of the branch-and-bound method has been described above with reference to FIG. 4. Details are not described herein again.

In some embodiments, the production planning device may check each constraint in the relaxation model by using a material assembly relationship (Bill of Material, BOM) before solving the relaxation model. The BOM may indicate constraints between different production planning variables. For example, if a production planning variable is a production quantity of a laptop computer, a production planning variable is a production quantity of a memory module for assembling the laptop computer. For example, the BOM may indicate that a laptop computer needs to include two memory modules, and the two variables naturally have a constraint: The production quantity of the memory module should be greater than or equal to twice the production quantity of the laptop computer. If it is determined that the material assembly relationship conflicts with a constraint in the relaxation model in this phase, the production planning device can quickly determine that the current industrial production planning job has no solution, thereby reducing possible computation costs and time costs.

Based on the production scheme discussed above, in this embodiment of this application, the production planning job can be converted into the corresponding production planning model, and the cut constraint corresponding to the integer parameter is generated based on a problem structure of the production planning model, so that a relaxation model with higher solution quality can be constructed. In this manner, in embodiments of this application, efficiency of industrial production planning can be improved, time costs or computation costs for industrial production planning can be reduced.

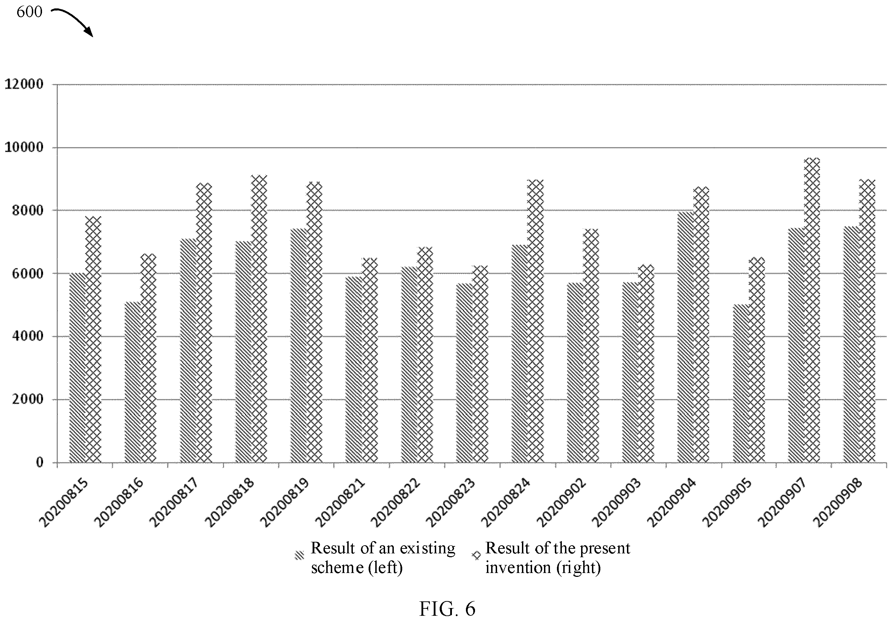

Further, FIG. 6 is a performance comparison diagram 600 between a production planning process according to some embodiments of this application and a conventional production planning process. As shown in FIG. 6, in each group of data, left columnar data represents a quantity of integer solutions of the relaxation model of the conventional MIP solver, and the right columnar data represents a quantity of integer solutions of the relaxation model that uses the production scheme in this application. It can be learned from FIG. 6 that a proportion of the quantity of integer solutions obtained based on the production scheme of this application is greater than a quantity of integer solutions obtained by a conventional MIP solver. In other words, the relaxation model obtained according to this embodiment of this application is closer to solution space of an optimal solution, so that an integer solution of a higher proportion can be obtained from the relaxation model. This can reduce a quantity of branches in the branch-and-bound method, thereby improving solution performance.

**Example scenario 2: resource scheduling**

In an example scenario, the industrial programming scheme according to this application may be used for a resource scheduling job. The resource scheduling job is one of the most common problems in large-scale manufacturing, logistics, and production. Scheduling has different meanings in different scenarios. For example, logistics scheduling indicates a process in which a logistics company arranges and schedules delivery vehicles and personnel based on a weight, a destination, specifications, and urgency of goods to be delivered. During production scheduling, jobs are sorted and jobs and machines are matched in several jobs based on production capacities and production requirements of different machines in different production lines.

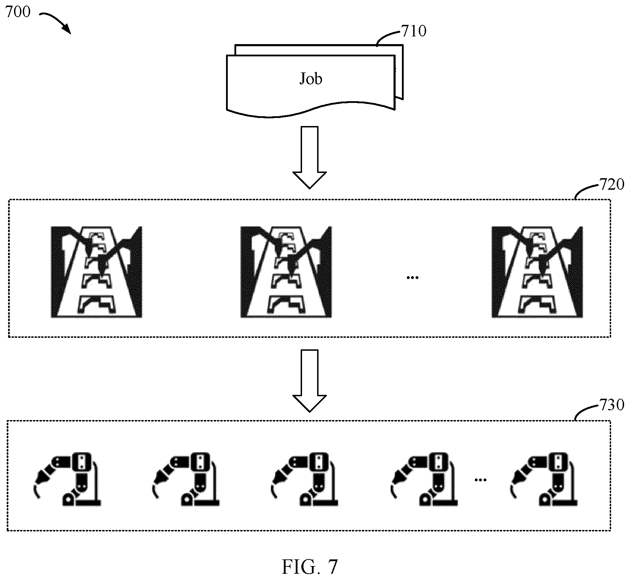

FIG. 7 is a schematic diagram 700 of resource scheduling according to embodiments of this application. As shown in FIG. 7, in a resource scheduling job, a plurality of jobs 710 need to be allocated to a plurality of production lines 720. In addition, each production line 720 may generally further include a plurality of machines 730, and in the resource scheduling job, a job that should be executed by each machine 730 in each production line 720 further needs to be arranged. Different from the production planning job, a two-layer programming structure can be used for the resource scheduling job. A model is a first typical two-layer programming structure, and upper and lower layers complete their respective objectives. Herein, a target of the resource scheduling job may depend on, for example, a reciprocal of total man-hours. A difference is that an upper-level reward function is a reciprocal of the total man-hours of different phases, and a lower-level reward function is a reciprocal of the total man-hours of different machines in a specified phase. The following describes a resource scheduling scheme programming process according to embodiments of this application with reference to a resource scheduling scenario.

When it is considered that the resource scheduling job is usually represented as a two-layer model, the scheduling programming device (for example, the programming device 240 discussed with reference to FIG. 2) may first perform solving of an upper-layer model, use a solving result of the upper-layer model as an input of a lower-layer model, and further solve the entire model. For ease of discussion, the following describes a resource scheduling scheme programming process by using an example of solving one layer of the model.

In the resource scheduling scheme programming process, the scheduling programming device (for example, the programming device 240 discussed with reference to FIG. 2) may obtain a first group of constraints for a plurality of scheduling parameters in a resource scheduling job. For example, the plurality of scheduling parameters may include specific duration of executing various jobs by each production line.

In some embodiments, as discussed above with reference to FIG. 2 and FIG. 3, the scheduling programming device may construct, for example, the first group of constraints based on a user input, that is, generate an MIP model represented by the formulas (1) to (4), which may, for example, correspond to an upper-layer model in the resource scheduling model.

Further, the scheduling programming device may construct, based on the first group of constraints, a cut constraint associated with at least one integer parameter in the plurality of scheduling parameters. Specifically, the scheduling programming device may identify an integer parameter in the plurality of scheduling parameters, and locate a target constraint that includes the integer parameter in the first group of constraints.

In some embodiments, the scheduling programming device may construct a corresponding cut constraint based on a determined problem structure of the target constraint. For example, the scheduling programming device may construct the cut constraint based on the problem structure of the target constraint according to one or more of a probing cut constraint construction scheme, a gomory cut constraint construction scheme, an intersection cut constraint construction scheme, a T-space cut constraint construction scheme, and a lower bound conflict-driven cut constraint construction scheme.

Further, the scheduling programming device may construct a second group of constraints based on the cut constraint and the first group of constraints. A type of the at least one integer parameter in the second group of constraints is changed. Specifically, the scheduling programming device may convert the first group of constraints into a corresponding group of relaxation constraints by removing an integer value constraint of the at least one integer parameter. For example, a type of the integer parameter can be converted to a floating-point parameter. Further, the scheduling programming device may construct the second group of constraints based on the cut constraint and the group of relaxation constraints.

The second group of constraints (that is, an initial relaxation model for solving) constructed in this manner includes a cut constraint constructed based on a problem structure of the first group of constraints. According to a mathematical programming theory, solution space of a new relaxation model is closer to solution space of the MIP problem, thereby improving solving performance of an entire process.

Further, the scheduling programming device may determine values of the plurality of scheduling parameters based on the second group of constraints, to generate a scheduling plan for a resource scheduling job. It should be understood that the scheduling programming device may use any appropriate process to solve the values of the plurality of scheduling parameters in the first group of constraints based on the relaxation model. As an example, the scheduling programming device may determine the values of the plurality of scheduling parameters according to the steps 410 to 418 discussed with reference to FIG. 4.

For example, the scheduling programming device may first use an appropriate method to solve the second group of constraints. The manner may include but are not limited to: a simplex method, a dual simplex method, an interior point method, and the like. Optionally, the scheduling programming device may further perform model modification. In some embodiments, this is an optional function. The scheduling programming device may perform only an optimality check by default. If this function is enabled, the scheduling programming device can add/delete/modify some constraints based on an optimal solution in a previous step. In this way, a next model can be optimized based on a previous solution. This step occurs mainly in a random or incremental model in which a requirement constraint or a material constraint may change over time.

In addition, the scheduling programming device may use an appropriate branch-and-bound method to obtain a solution (that is, the values of the plurality of scheduling parameters in the first group of constraints) of the MIP problem based on a solution of the relaxation model (that is, the second group of constraints). A process of the branch-and-bound method has been described above with reference to FIG. 4. Details are not described herein again.

In some embodiments, the scheduling programming device may also check each constraint in the relaxation model based on job time constraints or sequence constraints of production lines. If it is determined in this phase that the job time constraint or the sequence constraint conflicts with a constraint in the relaxation model, the scheduling programming device may quickly determine that the current scheduling programming has no solution, thereby reducing possible computation costs and time costs.

Based on the scheme discussed above, in this embodiment of this application, the resource scheduling job can be converted into the corresponding scheduling model, and the cut constraint corresponding to the integer parameter is generated based on a problem structure of the scheduling model, so that a relaxation model with higher solution quality can be constructed. In this manner, in embodiments of this application, efficiency of resource scheduling scheme programming can be improved, time costs or computation costs for resource scheduling scheme programming can be reduced.

**Another example scenario: route programming/target location/power grid scheduling**

An industrial programming scheme in this application may be further used in another type of scenario, for example, route programming, target location, or power grid scheduling.

For example, route programming may be related to a vehicle routing problem (Vehicle Routing Problem, VRP). The problem indicates that a specific quantity of customers have different quantities of goods requirements. A distribution center provides goods for the customers, and a fleet distributes the goods and organizing an appropriate driving route. A target is to meet the requirements of the customers, and achieve objectives such as a shortest distance, minimum costs, and minimum time consumption under a specific constraint. Therefore, the VRP problem may also be converted into a corresponding MIP model, and a solution of the MIP model is obtained according to the MIP solving scheme discussed above, thereby generating a route programming scheme.

The target location problem may relate to, for example, considering the facility location problem (Facility location) of a competitor. During actual application, competition of competitors should be considered when a location decision is made. Generally, a user needs to consider a discrete network in which two service providers (a leader and a follower) continue to open a certain quantity of facilities to compete for market share. Each customer will seek a service from a nearest facility. The target location problem may be understood as a two-layer linear programming problem. An upper-layer problem represents a leader's decision, and a goal is to maximize coverage. A lower-layer problem is a follower's corresponding NP difficulty problem. It is assumed that the follower adopts a greedy strategy. A single-layer integer programming model is constructed to integrate the follower's response into a constraint of the leader's problem. In a similar manner, in embodiments of this application, the two-layer model can be separately solved according to the MIP solving scheme discussed above, to determine the target location scheme.

The power grid scheduling scheme mainly relates to a power scheduling problem and includes two phases. In a first phase, a non-convex power system economic scheduling problem is converted into a mixed integer programming problem by using linearization processing and mixed integer coding technologies. Then, a mixed integer programming model is solved by using an optimized software package to obtain a satisfying feasible solution. In a second phase, an output range of a unit is compressed based on the feasible solution obtained in the first phase, and the mixed integer programming model is re-solved to obtain a final power system economic scheduling scheme. Based on a similar manner, in embodiments of this application, a power scheduling model can be separately solved according to the MIP solving scheme discussed above, to determine a power scheduling scheme.

It should be understood that although different scenarios of industrial programming are discussed above with reference to different embodiments, a mixed integer programming solving process according to embodiments of this application may be further applied to another appropriate industrial programming scenario, to improve the efficiency of industrial programming.

**Example apparatus and device**

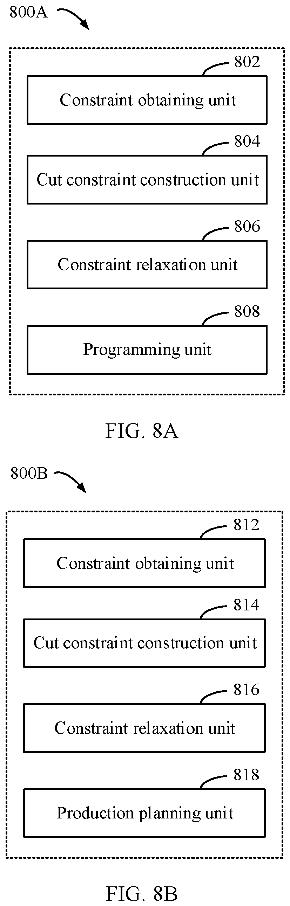

Further, FIG. 8A is a block diagram of an industrial programming apparatus 800A according to an embodiment of the present disclosure. The apparatus 800A may include a plurality of modules, configured to perform corresponding steps in the process 300 discussed in FIG. 3. As shown in FIG. 8A, the apparatus 800A includes: a constraint obtaining unit 802, configured to obtain a first group of constraints for a plurality of parameters in an industrial programming job; a cut constraint construction unit 804, configured to construct, based on the first group of constraints, a cut constraint associated with at least one integer parameter in the plurality of parameters; a constraint relaxation unit 806, configured to construct a second group of constraints based on the cut constraint and the first group of constraints, where a type of the at least one integer parameter in the second group of constraints is changed; and a programming unit 808, configured to determine values of the plurality of parameters based on the second group of constraints, to generate a programming scheme for the industrial programming job.

In some embodiments, the industrial programming job includes one of the following: an industrial production planning job, a resource scheduling job, a route programming job, or a target location job. For example, the industrial production planning job can be a programming scheme for guiding different producers to perform production. The resource scheduling job may include a plurality of types, for example, an electricity scheduling job for guiding electricity resource scheduling, a production scheduling job for guiding scheduling of different production resources, and a logistics scheduling job for guiding a logistics company to schedule logistics vehicles and distribution personnel resources. For example, the route programming job may include a vehicle route programming job for guiding routes for different delivery vehicles to deliver goods. This is also referred to as a vehicle routing problem (Vehicle Routing Problem, VRP). For example, the target location job may include a facility location job for guiding location of a specific enterprise or facility, which is also referred to as a facility location problem (Facility Location Problem). It should be understood that the industrial programming job discussed in this application may further include, for example, another type of industrial programming job that can be represented by one or more MIP models.

In some embodiments, the constraint obtaining unit 802 is further configured to: determine job information associated with the industrial programming job from a user input, where the job information indicates at least the plurality of parameters to be determined, parameter constraints related to the values of the plurality of parameters, and a target related to the industrial programming job; and construct the first group of constraints based on the job information.

In some embodiments, the cut constraint construction unit 804 is further configured to: identify the at least one integer parameter from the plurality of parameters; determine, from the first group of constraints, a target constraint associated with the at least one integer parameter; and construct, based on the target constraint, the cut constraint associated with the at least one integer parameter.

In some embodiments, the cut constraint construction unit 804 is further configured to: determine, from the user input, an identifier of a cut construction scheme for constructing the cut constraint; determine a target construction scheme based on the identifier from a group of cut constraint construction schemes; and construct, based on the target construction scheme, the cut constraint associated with the at least one integer parameter.

In some embodiments, the group of cut constraint construction schemes include at least one of the following: a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme. It should be understood that the cut constraint scheme aims to construct the corresponding cut constraint based on a problem structure of the target constraint, without depending on a solving result of a variable. Any other appropriate cut constraint scheme is also feasible.

In some embodiments, the constraint relaxation unit 806 is further configured to: convert the first group of constraints into a corresponding group of relaxation constraints by removing an integer value constraint of the at least one integer parameter; and construct the second group of constraints based on the cut constraint and the group of relaxation constraints.

Further, FIG. 8B is a block diagram of an industrial production planning apparatus 800B according to an embodiment of the present disclosure. The apparatus 800B may include a plurality of modules, configured to perform corresponding steps of the industrial production planning process discussed above. As shown in FIG. 8B, the apparatus 800B includes: a constraint obtaining unit 812, configured to obtain a first group of constraints for a plurality of production planning parameters in an industrial production planning job, where the plurality of production planning parameters include at least a production quantity of a producer; a cut constraint construction unit 814, configured to construct, based on the first group of constraints, a cut constraint associated with at least one integer parameter in the plurality of production planning parameters; a constraint relaxation unit 816, configured to construct a second group of constraints based on the cut constraint and the first group of constraints, where a type of the at least one integer parameter in the second group of constraints is changed; and a production planning unit 818, configured to determine values of the plurality of production planning parameters based on the second group of constraints, to generate a production plan for the production planning job.

In some embodiments, the constraint obtaining unit 812 is further configured to: determine job information associated with the industrial production planning job from a user input, where the job information indicates at least the plurality of production planning parameters to be determined, parameter constraints related to the values of the plurality of production planning parameters, and a production planning target related to the industrial production planning job; and construct the first group of constraints based on the job information.

In some embodiments, the cut constraint construction unit 814 is further configured to: identify the at least one integer parameter from the plurality of production planning parameters; determine, from the first group of constraints, a target constraint associated with the at least one integer parameter; and construct, based on the target constraint, the cut constraint associated with the at least one integer parameter.

In some embodiments, the cut constraint construction unit 814 is further configured to: determine, from the user input, an identifier of a cut construction scheme for constructing the cut constraint; determine a target construction scheme based on the identifier from a group of cut constraint construction schemes; and construct, based on the target construction scheme, the cut constraint associated with the at least one integer parameter.

In some embodiments, the group of cut constraint construction schemes include at least one of the following: a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme. It should be understood that the cut constraint scheme aims to construct the corresponding cut constraint based on a problem structure of the target constraint, without depending on a solving result of a variable. Any other appropriate cut constraint scheme is also feasible.

In some embodiments, the constraint relaxation unit 816 is further configured to: convert the first group of constraints into a corresponding group of relaxation constraints by removing an integer value constraint of the at least one integer parameter; and construct the second group of constraints based on the cut constraint and the group of relaxation constraints.

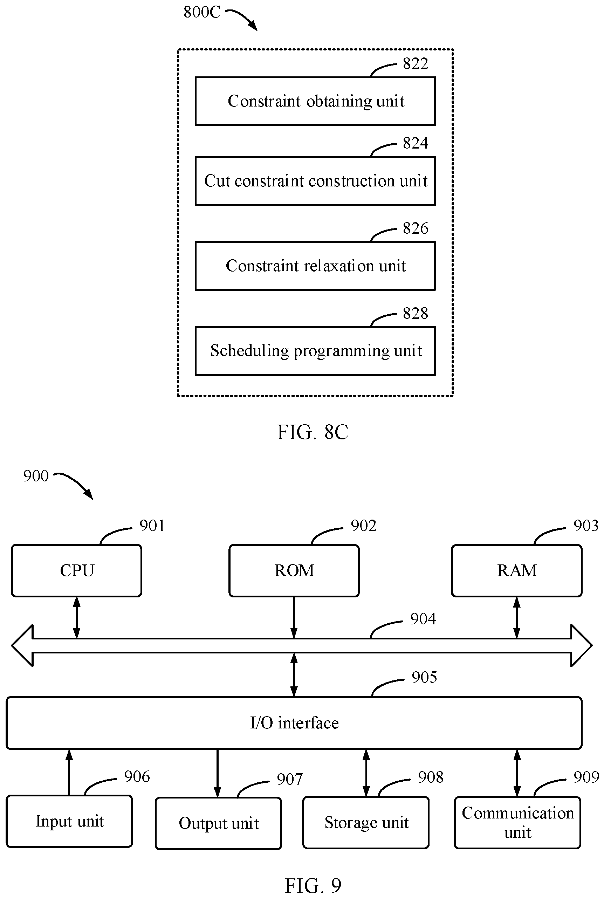

Further, FIG. 8C is a block diagram of a resource scheduling scheme programming apparatus 800C according to an embodiment of this disclosure. The apparatus 800C may include a plurality of modules, configured to perform corresponding steps in the resource scheduling scheme programming discussed above. As shown in FIG. 8C, the apparatus 800C includes: a constraint obtaining unit 822, configured to obtain a first group of constraints for a plurality of scheduling parameters in a resource scheduling job; a cut constraint construction unit 824, configured to construct, based on the first group of constraints, a cut constraint associated with at least one integer parameter of the plurality of scheduling parameters; a constraint relaxation unit 826, configured to construct a second group of constraints based on the cut constraint and the first group of constraints, where a type of the at least one integer parameter in the second group of constraints is changed; and a scheduling programming unit 828, configured to determine values of a plurality of production planning parameters based on the second group of constraints, to generate a scheduling plan for the resource scheduling job.

In some embodiments, the constraint obtaining unit 822 is further configured to: determine job information associated with the resource scheduling job from a user input, where the job information indicates at least the plurality of scheduling parameters to be determined, parameter constraints related to the values of the plurality of scheduling parameters, and a scheduling target related to the resource scheduling job; and construct the first group of constraints based on the job information.

In some embodiments, the cut constraint construction unit 824 is further configured to: identify the at least one integer parameter from the plurality of production planning parameters; determine, from the first group of constraints, a target constraint associated with the at least one integer parameter; and construct, based on the target constraint, the cut constraint associated with the at least one integer parameter.

In some embodiments, the cut constraint construction unit 824 is further configured to: determine, from the user input, an identifier of a cut construction scheme for constructing the cut constraint; determine a target construction scheme based on the identifier from a group of cut constraint construction schemes; and construct, based on the target construction scheme, the cut constraint associated with the at least one integer parameter.

In some embodiments, the group of cut constraint construction schemes include at least one of the following: a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme. It should be understood that the cut constraint scheme aims to construct the corresponding cut constraint based on a problem structure of the target constraint, without depending on a solving result of a variable. Any other appropriate cut constraint scheme is also feasible.

In some embodiments, the constraint relaxation unit 826 is further configured to: convert the first group of constraints into a corresponding group of relaxation constraints by removing an integer value constraint of the at least one integer parameter; and construct the second group of constraints based on the cut constraint and the group of relaxation constraints.

FIG. 9 is a schematic block diagram of an example device 900 that may be configured to implement an embodiment of this application. For example, the programming device 240 or the MIP solver according to embodiments of this application may be implemented by the device 900. As shown in the figure, the device 900 includes a central processing unit (CPU) 901, which may perform various appropriate actions and processing according to computer program instructions stored in a read-only memory (ROM) 902 or computer program instructions loaded from a storage unit 908 to a random access memory (RAM) 903. The RAM 903 may further store various programs and data required for an operation of the device 900. The CPU 901, the ROM 902, and the RAM 903 are connected to each other through a bus 904. An input/output (I/O) interface 905 is also connected to the bus 904.

A plurality of components in the device 900 are connected to the I/O interface 905, and include: an input unit 906, for example, a keyboard or a mouse; an output unit 907, for example, various types of displays or speakers; a storage unit 908, for example, a magnetic disk or an optical disc; and a communication unit 909, for example, a network adapter, a modem, or a wireless communications transceiver. The communication unit 909 allows the device 900 to exchange information/data with another device over a computer network such as the internet and/or various telecommunication networks.

The processes and processing described above, for example, the process 300, may be performed by the processing unit 901. For example, in some embodiments, the process 300 may be implemented as a computer software program, and is tangibly included in a machine-readable medium, for example, the storage unit 908. In some embodiments, some or all of the computer programs may be loaded and/or installed on the device 900 by using the ROM 902 and/or the communication unit 909. When a computer program is loaded into the RAM 903 and executed by the CPU 901, one or more actions of the process 300 described above may be performed.

This application may be a method, an apparatus, a system, and/or a computer program product. The computer program product may include a computer-readable storage medium, having computer-readable program instructions thereon for performing various aspects of this application.

The computer-readable storage medium may be a tangible device that can retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (a non-exhaustive list) of the computer-readable storage media include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoded device such as a punched card or a groove protrusion structure storing instructions on the punched card or the groove protrusion structure, and any suitable combination of the foregoing. The computer-readable storage medium used herein is not to be construed as a transient signal, such as a radio wave or another freely propagating electromagnetic wave, an electromagnetic wave propagating through a waveguide or another transmission medium (such as a light pulse through a fiber optic cable), or an electrical signal transmitted through a wire.

The computer-readable program instructions described herein may be downloaded from the computer-readable storage medium to respective computing/processing devices or to an external computer or external storage device through a network such as the internet, a local area network, a wide area network, and/or a wireless network. The network may include a copper transmission cable, optical fiber transmission, wireless transmission, a router, a firewall, a switch, a gateway computer and/or an edge server. A network adapter card or network interface in each computing/processing device receives the computer-readable program instructions from the network and forwards the computer-readable program instructions for storage in a computer-readable storage medium in each computing/processing device.

The computer program instructions used to perform operations in this application may be an assembly instruction, an instruction set architecture (ISA) instruction, a machine instruction, a machine-related instruction, microcode, a firmware instruction, status setting data, or source code or target code written in any combination of one or more programming languages. The programming languages include an object-oriented programming language such as Smalltalk and C++, and a conventional procedural programming language such as a "C" language or a similar programming language. The computer-readable program instructions may be executed entirely on a user computer, partly on the user computer, as a stand-alone software package, partly on the user computer and partly on a remote computer, or entirely on the remote computer or a server. When a remote computer is involved, the remote computer may be connected to a user computer through any type of network, including a local area network (LAN) or a wide area network (WAN), or may be connected to an external computer (for example, connected by using an internet service provider through the internet). In some embodiments, an electronic circuit, for example, a programmable logic circuit, a field programmable gate array (FPGA), or a programmable logic array (PLA), is customized by using status information of the computer-readable program instructions. The electronic circuit may execute the computer-readable program instructions, so as to implement the various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processing unit of a general-purpose computer, a special-purpose computer, or another programmable data processing apparatus to produce a machine, so that the instructions, when executed by the processing unit of the computer or the another programmable data processing apparatus, create an apparatus for implementing functions/acts specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner. Therefore, the computer-readable medium storing the instructions includes an artifact that includes instructions for implementing various aspects of the functions/acts specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements the functions/acts specified in the one or more blocks in the flowcharts and/or block diagrams.

The flowcharts and block diagrams in the accompanying drawings show the system architecture, function, and operation of possible implementations of systems, methods, and computer program products according to various embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two continuous blocks may actually be executed substantially in parallel, and may sometimes be executed in a reverse order, depending on a function involved. It should also be noted that each block in the block diagrams and/or flowcharts, and the combination of the blocks in the block diagrams and/or flowcharts may be implemented by a special-purpose hardware-based system that performs a specified function or act, or may be implemented by a combination of special-purpose hardware and computer instructions.

Implementations of this application are described above. The foregoing descriptions are examples, not exhaustive, and not limited to the foregoing disclosed implementations. Many modifications and variations are apparent to a person of ordinary skill in the art without departing from the scope and spirit of the described implementations. Selection of terms used in this specification is intended to best explain implementation principles, actual application or improvements to technologies in the market, or to enable another person of ordinary skill in the art to understand the implementations disclosed in this specification.

## Claims

1. An industrial production planning method, comprising:

   obtaining a first group of constraints for a plurality of production planning parameters in an industrial production planning job, wherein the plurality of production planning parameters comprise at least a production quantity of a producer;
   constructing, based on the first group of constraints, a cut constraint associated with at least one integer parameter in the plurality of production planning parameters;
   constructing a second group of constraints based on the cut constraint and the first group of constraints, wherein a type of the at least one integer parameter in the second group of constraints is changed; and
   determining values of the plurality of production planning parameters based on the second group of constraints, to generate a production plan for the industrial production planning job.

2. The method according to claim 1, wherein the obtaining a first group of constraints for a plurality of production planning parameters in an industrial production planning job comprises:

   determining job information associated with the industrial production planning job from a user input, wherein the job information indicates at least the plurality of production planning parameters to be determined, parameter constraints related to the values of the plurality of production planning parameters, and a production planning target related to the industrial production planning job; and
   constructing the first group of constraints based on the job information.

3. The method according to claim 1 or 2, wherein the constructing, based on the first group of constraints, a cut constraint associated with at least one integer parameter in the plurality of production planning parameters comprises:

   identifying the at least one integer parameter from the plurality of production planning parameters;
   determining, from the first group of constraints, a target constraint associated with the at least one integer parameter; and
   constructing, based on the target constraint, the cut constraint associated with the at least one integer parameter.

4. The method according to claim 1 or 2, wherein the constructing, based on the first group of constraints, a cut constraint associated with at least one integer parameter in the plurality of production planning parameters comprises:

   determining, from the user input, an identifier of a cut construction scheme for constructing the cut constraint;

determining a target construction scheme based on the identifier from a group of cut constraint construction schemes; and

constructing, based on the target construction scheme, the cut constraint associated with the at least one integer parameter.

5. The method according to claim 4, wherein the group of cut constraint construction schemes comprise at least one of the following:

a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme.

6. The method according to any one of claims 1 to 5, wherein the constructing a second group of constraints based on the cut constraint and the first group of constraints comprises:

converting the first group of constraints into a corresponding group of relaxation constraints by removing an integer value constraint of the at least one integer parameter; and

constructing the second group of constraints based on the cut constraint and the group of relaxation constraints.

7. An industrial programming method, comprising:

obtaining, by using at least one processor, a first group of constraints for a plurality of parameters in an industrial programming job;

constructing, by using the at least one processor based on the first group of constraints, a cut constraint associated with at least one integer parameter in the plurality of parameters;

constructing, by using the at least one processor, a second group of constraints based on the cut constraint and the first group of constraints, wherein a type of the at least one integer parameter in the second group of constraints is changed; and

determining, by using the at least one processor, values of the plurality of parameters based on the second group of constraints, to generate a programming scheme for the industrial programming job.

8. The method according to claim 7, wherein the industrial programming job comprises one of the following:

an industrial production planning job, a resource scheduling job, a route programming job, or a target location job.

9. The method according to claim 7 or 8, wherein the obtaining a first group of constraints for a plurality of parameters in an industrial programming job comprises:

determining job information associated with the industrial programming job from a user input, wherein the job information indicates at least the plurality of parameters to be determined, parameter constraints related to the values of the plurality of parameters, and a target related to the industrial programming job; and

constructing the first group of constraints based on the job information.

10. The method according to any one of claims 7 to 9, wherein the constructing, based on the first group of constraints, a cut constraint associated with at least one integer parameter in the plurality of parameters comprises:

identifying the at least one integer parameter from the plurality of parameters;

determining, from the first group of constraints, a target constraint associated with the at least one integer parameter; and

constructing, based on the target constraint, the cut constraint associated with the at least one integer parameter.

11. The method according to any one of claims 7 to 10, wherein the constructing, based on the first group of constraints, a cut constraint associated with at least one integer parameter in the plurality of parameters comprises:

determining, from the user input, an identifier of a cut construction scheme for constructing the cut constraint;

determining a target construction scheme based on the identifier from a group of cut constraint construction schemes; and

constructing, based on the target construction scheme, the cut constraint associated with the at least one integer parameter.

12. The method according to claim 11, wherein the group of cut constraint construction schemes comprise at least one of the following:
a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme.

13. The method according to any one of claims 7 to 12, wherein the constructing a second group of constraints based on the cut constraint and the first group of constraints comprises:

converting the first group of constraints into a corresponding group of relaxation constraints by removing an integer value constraint of the at least one integer parameter; and
constructing the second group of constraints based on the cut constraint and the group of relaxation constraints.

14. An industrial production planning apparatus, comprising:

a constraint obtaining unit, configured to obtain a first group of constraints for a plurality of production planning parameters in an industrial production planning job, wherein the plurality of production planning parameters comprise at least a production quantity of a producer;
a cut constraint construction unit, configured to construct, based on the first group of constraints, a cut constraint associated with at least one integer parameter in the plurality of production planning parameters;
a constraint relaxation unit, configured to construct a second group of constraints based on the cut constraint and the first group of constraints, wherein a type of the at least one integer parameter in the second group of constraints is changed; and
a production planning unit, configured to determine values of the plurality of production planning parameters based on the second group of constraints, to generate a production plan for the industrial production planning job.

15. The apparatus according to claim 14, wherein the constraint obtaining unit is further configured to:

determine job information associated with the industrial production planning job from a user input, wherein the job information indicates at least the plurality of production planning parameters to be determined, parameter constraints related to the values of the plurality of production planning parameters, and a production planning target related to the industrial production planning job; and
construct the first group of constraints based on the job information.

16. The apparatus according to claim 14 or 15, wherein the cut constraint construction unit is further configured to:

identify the at least one integer parameter from the plurality of production planning parameters;
determine, from the first group of constraints, a target constraint associated with the at least one integer parameter; and
construct, based on the target constraint, the cut constraint associated with the at least one integer parameter.

17. The apparatus according to claim 14 or 15, wherein the cut constraint construction unit is further configured to:

determine, from the user input, an identifier of a cut construction scheme for constructing the cut constraint;
determine a target construction scheme based on the identifier from a group of cut constraint construction schemes; and
construct, based on the target construction scheme, the cut constraint associated with the at least one integer parameter.

18. The apparatus according to claim 17, wherein the group of cut constraint construction schemes comprise at least one of the following:
a probing cut Probing Cuts constraint construction scheme, a gomory cut Gomory Cuts constraint construction scheme, an intersection cut Intersection Cuts constraint construction scheme, a T-space cut T-space Cuts constraint construction scheme, or a lower bound conflict-driven cut constraint construction scheme.

19. The apparatus according to any one of claims 14 to 18, wherein the constraint relaxation unit is further configured to:

convert the first group of constraints into a corresponding group of relaxation constraints by removing an integer value constraint of the at least one integer parameter; and
construct the second group of constraints based on the cut constraint and the group of relaxation constraints.

20. An electronic device, comprising:

    at least one computing unit;
    at least one memory, wherein the at least one memory is coupled to the at least one computing unit and stores instructions to be executed by the at least one computing unit, and when the instructions are executed by the at least one computing unit, the device is enabled to perform the method according to any one of claims 1 to 13.

21. A computer-readable storage medium, wherein the computer-readable storage medium stores a computer program, and when the program is executed by a processor, the method according to any one of claims 1 to 13 is implemented.

22. A computer program product, comprising computer-executable instructions, wherein when the computer-executable instructions are executed by a processor, the method according to any one of claims 1 to 13 is implemented.

100

102

Pre-solve

104

Construct a relaxation
model

106

Solve a linear
programming problem

108

Node selection

118

Heuristic algorithm

112

Conflict analysis

110

Generate a linear
programming problem

116

Construct a cut
constraint

114

Bound

FIG. 1

FIG. 2

300

┌─────────────────────────────────────────────────────────────┐ ⌐ 310
│ Obtain a first group of constraints for a plurality of parameters in an industrial │
│                      programming job                      │
└─────────────────────────────────────────────────────────────┘

┌─────────────────────────────────────────────────────────────┐ ⌐ 320
│ Construct, based on the first group of constraints, a cut constraint associated │
│      with at least one integer parameter in the plurality of parameters      │
└─────────────────────────────────────────────────────────────┘

┌─────────────────────────────────────────────────────────────┐ ⌐ 330
│ Construct a second group of constraints based on the cut constraint and the │
│ first group of constraints, where a type of the at least one integer parameter in │
│             the second group of constraints is changed             │
└─────────────────────────────────────────────────────────────┘

┌─────────────────────────────────────────────────────────────┐ ⌐ 340
│ Determine values of the plurality of parameters based on the second group of │
│ constraints, to generate a programming scheme for the industrial programming │
│                           job                           │
└─────────────────────────────────────────────────────────────┘

FIG. 3

400

402

Obtain an MIP model

404

Identify an integer variable

406

Construct a cut constraint corresponding to a constraint of the integer variable

408

Add the cut constraint to a linear programming model to construct a relaxation model

410

Solve the linear programming model

412

Add a new constraint based on a requirement change and a linear programming solution

414

Are all required variables integers?

Yes

No

416

Construct a new linear programming model according to a branch-and-bound method

418

Complete solving of the MIP model

FIG. 4

FIG. 5

500

502 Customer

504 Sales and operation

506 Main scheme

508 Procurement scheme

510 Supplier

512 Production scheme

514 Manufacturing

516 Logistics

518 Customer

600

FIG. 6

FIG. 7

800A

```
┌ ─ ─ ─ ─ ─ ─ ─ ─ ─ ─ ─ ─ ─ ─ ─ ─ ─ ┐
│                           ┌─ 802    │
│   ┌───────────────────────────┐     │
│   │  Constraint obtaining unit │     │
│   └───────────────────────────┘     │
│                           ┌─ 804    │
│   ┌───────────────────────────┐     │
│   │ Cut constraint construction unit │ │
│   └───────────────────────────┘     │
│                           ┌─ 806    │
│   ┌───────────────────────────┐     │
│   │  Constraint relaxation unit │    │
│   └───────────────────────────┘     │
│                           ┌─ 808    │
│   ┌───────────────────────────┐     │
│   │     Programming unit        │    │
│   └───────────────────────────┘     │
└ ─ ─ ─ ─ ─ ─ ─ ─ ─ ─ ─ ─ ─ ─ ─ ─ ─ ┘
```

FIG. 8A

800B

```
┌ ─ ─ ─ ─ ─ ─ ─ ─ ─ ─ ─ ─ ─ ─ ─ ─ ─ ┐
│                           ┌─ 812    │
│   ┌───────────────────────────┐     │
│   │  Constraint obtaining unit │     │
│   └───────────────────────────┘     │
│                           ┌─ 814    │
│   ┌───────────────────────────┐     │
│   │ Cut constraint construction unit │ │
│   └───────────────────────────┘     │
│                           ┌─ 816    │
│   ┌───────────────────────────┐     │
│   │  Constraint relaxation unit │    │
│   └───────────────────────────┘     │
│                           ┌─ 818    │
│   ┌───────────────────────────┐     │
│   │   Production planning unit  │    │
│   └───────────────────────────┘     │
└ ─ ─ ─ ─ ─ ─ ─ ─ ─ ─ ─ ─ ─ ─ ─ ─ ─ ┘
```

FIG. 8B

800C

822
Constraint obtaining unit

824
Cut constraint construction unit

826
Constraint relaxation unit

828
Scheduling programming unit

FIG. 8C

900

901
CPU

902
ROM

903
RAM

904

905
I/O interface

906
Input unit

907
Output unit

908
Storage unit

909
Communication unit

FIG. 9

## INTERNATIONAL SEARCH REPORT

| International application No. |
|---|
| **PCT/CN2022/095457** |

| A. | CLASSIFICATION OF SUBJECT MATTER |
|---|---|

G05B 19/418(2006.01)i

According to International Patent Classification (IPC) or to both national classification and IPC

| B. | FIELDS SEARCHED |
|---|---|

Minimum documentation searched (classification system followed by classification symbols)

G05B19/-; G06Q; G06F

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI, IEEE: 排产, 产线, 计划, 调度, 混合整数规划, 整数规划, 整数, 整型, 割约束, 割平面, 松弛, production, line, schedule+, plan, step, duration, mixed, integer, programming, MIP, cutting, cuts, relax, slack

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 104611000 A (NORTHEASTERN UNIVERSITY) 13 May 2015 (2015-05-13)<br>entire document | 1-22 |
| A | CN 111680877 A (HANGZHOU CHUANHUA INTELLIGENT MANUFACTURING TECHNOLOGY CO., LTD.) 18 September 2020 (2020-09-18)<br>entire document | 1-22 |
| A | CN 109272145 A (BEIJING TECHNOLOGY AND BUSINESS UNIVERSITY) 25 January 2019 (2019-01-25)<br>entire document | 1-22 |
| A | 李炯城 等 (LI, Jiongcheng et al.). "组合优化中整数规划的数论解法 (New Method Based on Number Theory for Integer Programming of Combinatorial Optimization)"<br>计算机工程与设计 (Computer Engineering and Design),<br>Vol. 30, No. 5,, 16 March 2009 (2009-03-16),<br>ISSN: 1000-7024,<br>pages 1276-1278 | 1-22 |
| A | US 2017083028 A1 (MACAU UNIVERSITY OF SCIENCE AND TECHNOLOGY) 23 March 2017 (2017-03-23)<br>entire document | 1-22 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2022** | **07 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/095457** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2006112049 A1 (LIZ, L. et al.) 25 May 2006 (2006-05-25)<br>entire document | 1-22 |

Form PCT/ISA/210 (second sheet) (January 2015)

INTERNATIONAL SEARCH REPORT
Information on patent family members

International application No.

**PCT/CN2022/095457**

| Patent document cited in search report | | | Publication date (day/month/year) | Patent family member(s) | | | Publication date (day/month/year) |
|---|---|---|---|---|---|---|---|
| CN | 104611000 | A | 13 May 2015 | CN | 104611000 | B | 02 March 2016 |
| CN | 111680877 | A | 18 September 2020 | | None | | |
| CN | 109272145 | A | 25 January 2019 | | None | | |
| US | 2017083028 | A1 | 23 March 2017 | AU | 2015101560 | A4 | 26 November 2015 |
| | | | | US | 9957959 | B2 | 01 May 2018 |
| US | 2006112049 | A1 | 25 May 2006 | | None | | |

Form PCT/ISA/210 (patent family annex) (January 2015)